Europäisches Patentamt

European Patent Office

Office européen des brevets

(19) ⑲

(11) Publication number: **0 027 360**
**B1**

(12) **EUROPEAN PATENT SPECIFICATION**

(45) Date of publication of patent specification: **26.06.85**

(21) Application number: **80303568.2**

(22) Date of filing: **09.10.80**

(51) Int. Cl.⁴: **F 16 B 39/12, F 16 B 39/282**

(54) Locknut assembly.

(30) Priority: **12.10.79 GB 7935473**

(43) Date of publication of application:
**22.04.81 Bulletin 81/16**

(45) Publication of the grant of the patent:
**26.06.85 Bulletin 85/26**

(84) Designated Contracting States:
**DE FR GB IT SE**

(56) References cited:
FR-A- 846 606
FR-A-2 335 725
GB-A- 154 467
GB-A- 454 112
GB-A- 672 396
GB-A-1 409 526
GB-A-1 409 527

(73) Proprietor: **FORD MOTOR COMPANY LIMITED
Eagle Way
Brentwood Essex CM13 3BW (GB)**
㊶ **GB IT SE**
(73) Proprietor: **Gill's Cables Limited
Packington Hall Tamworth Road
Lichfield, Staffs WS14 9PP (GB)**
㊶ **DE FR GB IT SE**
(73) Proprietor: **FORD-WERKE
AKTIENGESELLSCHAFT
Ottoplatz 2 Postfach 21 03 69
D-5000 Köln 21 (DE)**
㊶ **DE**
(73) Proprietor: **FORD FRANCE SOCIETE ANONYME
344 Avenue Napoléon Bonaparte B.P. 307
F-92506 Rueil Malmaison Cedex (FR)**
㊶ **FR**

(72) Inventor: **Timpson, Ian Grenville
25 York Close
Lichfield Staffordshire (GB)**
Inventor: **Johnson, Anthony George
49 MacMurdo Road
Leigh-On-Sea Essex (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 027 360 B1

**0 027 360**

74) Representative: **Drakeford, Robert William et al
Ford Motor Company Limited 15/448, Research
& Engineering Centre Laindon
Basildon Essex SS15 6EE (GB)**

## Description

This invention relates to locknut assemblies.

Conventional locknut assemblies comprise an externally threaded member and two locking members threadedly mounted thereon, each having an abutment surface which can be brought into engagement with the abutment surface of the other locking member to brace the locking members against the thread on the threaded member.

GB—A—154467 discloses a locknut assembly in which the abutting faces of the two locking members are provided with interlocking serrations.

Where the locknut assembly includes components of deformable material, overtightening of the locking members can produce a reaction force sufficient to cause permanent deformation of the thread on the threaded member, or of the locking members.

For example, GB—A—1409526 and GB—A—1409527 disclose a control cable assembly which comprises one or more wires wound to form a thread on the external surface of the control cable. The cable is secured relative to a bulkhead or control panel by means of two locking members of plastics material threaded on to the cable. If the locking members are overtightened, the force exerted on the windings of the cable can be sufficient to separate adjacent turns of the wire, and to cause permanent deformation thereof. Alternatively, the internal threads of the locking members may be damaged.

According to the present invention there is provided a locknut assembly comprising an externally threaded member and two locking members threadedly mounted thereon each having an abutment surface which can be brought into engagement with the abutment surface of the other locking member to brace the locking members against the threads of the threaded member, wherein one of the locking members is provided with a plurality of circumferentially-spaced projections and the other locking member is provided with a projection which can extend between adjacent pairs of projections on the said one locking member characterised in that the spacing between adjacent pairs of projections on the said one locking member, and the sizes of the projections, on both locking members are such that, on tightening the locking members, distinct tactual or audible sensations are generated when the projection on the said other locking member rides over each of the projections on the said one locking member and that the projection on the said other locking member can ride over a predetermined number of projections on the said one locking member when the locking members are braced against the threads of the threaded member without causing permanent deformation of the threaded member or the locking members.

Since the projection on the said other locking member can ride over at least one projection on the said one locking member when the locking members are braced against the thread, the operator will be able to sense, either audibly or tactually, when the members have been tightened sufficiently to lock the members relative to the cable.

The invention is specifically applicable to control cable assemblies. In the preferred application of the invention therefore, the threaded member of the locknut assembly comprises a control cable composed of one or more wires wound to form a thread on the external surface of the cable.

Preferably, the locking members are composed of moulded plastics material.

The abutment surfaces of the locking members are conveniently formed as radial end faces on the locking members. The projections on the said one locking member may be formed between radial grooves in the radial face, and, on the said other locking member, by radial ridges on its radial face.

A preferred embodiment of the invention will now be described, by way of example only, with reference to the accompanying drawings, in which:—

Figure 1 is an axial cross-section through a control cable incorporating a locknut assembly in accordance with the invention;

Figure 2 is an end view of one locking member of the assembly of Figure 1 taken in the direction of arrows II—II;

Figure 3 is a partial cross-section of the locking member of Figure 2, on an enlarged side, taken in the direction of the arrows III;

Figure 4 is an end view of the other locking member of Figure 1 taken in the direction of arrows IV—IV of Figure 1; and

Figure 5 is a partial cross-section of the locking member of Figure 4, on an enlarged scale, taken in the direction of the arrows V.

Referring to the drawings, a flexible control cable 1 comprises a sheath 2 composed of a wire 3 which is wound around a control wire 4. The windings of the wire 3 form a thread on the external surface of the cable.

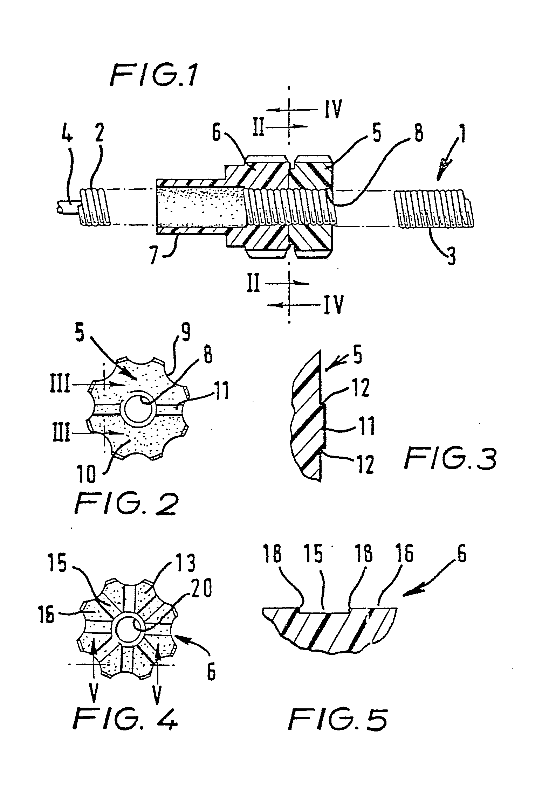

Two locking members 5, 6 are threaded on to the cable 1. The first locking member 5, illustrated in detail in Figures 2 and 3, comprises an integrally-moulded nut of plastics material (e.g. nylon or polyethylene) having an internally threaded central axial passage 8 by means of which the nut may be threaded on to the cable 1. The external circumferential surface of the nut is provided with notches 9 to facilitate manipulation of the nut. A radial end face 10 of the nut 5 is provided with two diametrically opposed axially-extending ridges or projections 11, the radial edges 12 of which are rounded.

The second locking member 6, illustrated in detail in Figures 4 and 5, also comprises an integral moulding of plastics material having an internally-threaded central axial passage 20 by means of which the second locking member 6 may be threaded on to the cable 1. One end of the locking member 6 forms a nut of similar shape and size to the first locking member 5, having a notched circumferential surface and an end face 13, which faces the end face 10 of the first locking member. The other end of the locking member 6 is in the form of a ferrule 7 which, in use, is received in an aperture in a bulkhead or mounting panel (not shown).

As best seen in Figures 4 and 5, the end face 13 of the second locking member defines eight radially extending grooves 15, adjacent pairs of which reveal sectors or projections 16 which project axially from the end face 13. The radial edges 18 of the sectors 16 are rounded, and the grooves 15 are sufficiently wide to receive the ridges 11 on the end face of the first locking member.

In use, the control cable 3 is attached at its lefthand end as seen in Figure 1, to, for example, a vehicle brake. The cable passes through an aperture in a bulkhead or instrument panel (not shown) and is connected at the other end to an operating lever, e.g. a hand brake lever. In order to tension the cable, the second locking member 6 is threaded along the cable 1 until the ferrule 7 passes through the aperture in the bulkhead or panel, to bring the locking member into engagement therewith. In order to fix the position of the second locking member 6 on the cable 1, the first locking member 5 is then threaded along the cable 1 until its end face 10 abuts the end face 13 of the second locking member. Continued movement of the first locking member 5 towards the second locking member 6 will brace the two locking members against the threads of the control cable 1 and lock the two members relative to the cable 1. Still further rotation of the first locking member 5 relative to the second locking member 6 will increase the force exerted by the members on the cable 1 and, if continued, would eventually cause damage to the cable, or the internal threads of the locking members 5, 6.

However, when the two locking members have been braced against the threads on the control cable 1, continued rotation of the first locking member relative to the second can only occur if the ridges 11 on the first member can ride over the sectors 16 on the second member, which requires a deformation of the control cable 1 or of the locking members 5, 6, or both. The extent to which such continued relative rotation can occur is controlled by the depths and circumferential spacings of the grooves 15 and the heights and circumferential spacings of the ridges 12 in relation to the pitch of the thread on the control cable 1. These dimensions are so selected that, when the two locking members 5, 6 have been braced against the thread on the control member 1, the ridges 11 can ride over at least one sector 16, and preferably two or three sectors, without causing permanent deformation of the locking members or the control cable. The rounded edges 12, 18 facilitate this movement.

As a result, the operator will sense, audibly or tactually, that the locknut is at the required tightness. At this point, further rotation of the second member towards the first member by hand will become more difficult in view of the engagement of the ridges 11 between the sectors 16. In order to obtain a reliable assembly without causing damage to the cable therefore the operator should be instructed to tighten the assembly by hand only until he senses the movement of the ridges 11 over three of the sectors.

As an example of suitable dimensions for the projections on the end faces of the locking members, locking members having grooves and ridges of about 0.5 mm in depth and height respectively in the configurations shown in the drawing performed satisfactorily on cable composed of wire of 2 mm diameter cross-section with 4 turns per cm.

## Claims

1. A locknut assembly comprising an externally threaded member (1) and two locking members (5, 6) threadedly mounted thereon each having an abutment surface (10) (13) which can be brought into engagement with the abutment surface of the other locking member to brace the locking members against the threads of the threaded member (1), wherein one of the locking members (6) is provided with a plurality of circumferentially-spaced projections (16) and the other locking member (5) is provided with a projection (11) which can extend between adjacent pairs of projections (16) on the said one locking member (6) characterised in that the spacing between adjacent pairs of projections (16) on the said one locking member, and the sizes of the projections (11, 16) on both locking members (5, 6) are such that, on tightening the locking members, distinct tactual or audible sensations are generated when the projection (11) on the said other locking member (5) rides over each of the projections (16) on the said one locking member (6), and in that the projection (11) on the said other locking member (5) can ride over a predetermined number of projections (16) on the said one locking member (6) when the locking members (3, 6) are braced against the threads of the threaded member (1) without causing permanent deformation of the threaded member (1) or the locking members (5, 6).

2. A locknut assembly according to Claim 1 wherein the threaded member (1) comprises a control cable sheath (2) composed of one or more wires (3) wound to form an external thread on its external surface.

3. A locknut assembly according to Claim 1 or Claim 2 wherein the locking members (5, 6) are formed from a moulded plastics material.

4. A locknut assembly according to any one of Claims 1 to 3 wherein the abutment surfaces (10, 13) comprise radially extending faces on the locking members.

5. A locknut assembly according to Claim 4 wherein the projections (16) are formed on the said one member (6) between radial grooves (15) in its radially extending face (13), and, on the said other member (5) by radial ridges (11) on its radially extending face (10).

## Revendications

1. Montage de contre-écrou comprenant un organe fileté (1) et deux organes de blocage (5, 6) vissés sur l'organe fileté et présentant chacun une surface d'arrêt (10, 13) qui peut être amenée en contact avec la surface d'arrêt de l'autre organe de blocage pour arc-bouter les organes de blocage sur le pas de vis de l'organe fileté (1), dans lequel un des organes de blocage (6) est pourvu de plusieurs saillies espacées circonférentiellement et l'autre organe de blocage (5) est pourvu d'une saillie (11) qui peut s'étendre entre de paires adjacentes de saillies (16) du premier organe de blocage (6), caractérisé en ce que l'espacement entre des paires adjacentes de saillies (16) sur le premier organe de blocage et les dimensions des saillies (11, 16) sur les deux organes de blocage (5, 6) sont tels que, lors du serrage des organes de blocage, des phénomènes tactiles ou audibles distincts sont produits lorsque la saillie (11) de l'autre organe de blocage (5) passe par-dessus chaque saillie (16) du premier organe de blocage (6), et la saillie (11) de l'autre organe de blocage (5) peut glisser par-dessus un nombre prédéterminé de saillies (16) du premier organe de blocage (6) lorsque les organes de blocage (3, 6) sont arc-boutés sur le pas de vis de l'organe fileté (1) sans provoquer de déformation permanente de l'organe fileté (1) ou des organes de blocage (5, 6).

2. Montage de contre-écrou suivant la revendication 1, dans lequel l'organe fileté (1) est une gaine de câble de commande (2) faite d'un ou de plusieurs fils métalliques (3) enroulés de manière à former une surface externe filetée.

3. Montage de contre-écrou suivant la revendication 1 ou 2, dans lequel les organes de blocage (5, 6) sont faits d'une matière plastique moulée.

4. Montage de contre-écrou suivant l'une quelconque des revendications 1 à 3, dans lequel les surfaces d'arrêt (10, 13) sont des faces radiales prévues sur les organes de blocage.

5. Montage de contre-écrou suivant la revendication 4, dans lequel les saillies (16) sont formées sur la premier organe (6) entre des rainures radiales (15) prévues dans sa face radiale (13) et, sur l'autre organe (5), par des nervures radiales (11) prévues sur sa face radiale (10).

## Patentansprüche

1. Ein Gegenmutter-Zusammenbau, bestehend aus einem Gewindebolzen (1) und zwei darauf verschraubten Kontergliedern (5, 6), jeweils mit einer Stirnfläche (10) (13) ausgestattet, die mit der Stirnfläche des anderen Konterglieds in Eingriff gebracht werden kann, um die Konterglieder auf dem Gewinde des Gewindebolzens (1) zu verspannen, wobei das eine Konterglied (6) eine Vielzahl von am Umfang in bestimmten Abständen angeordneten Vorsprüngen (16) und das andere Konterglied (5) einen Vorsprung (11) aufweist, der zwischen angrenzenden Paaren der Vorsprünge (16) auf dem genannten Konterglied (6) eingreifen kann, dadurch gekennzeichnet, daß der Abstand zwischen angenzenden Paaren der Vorsprünge (16) auf dem genannten Konterglied und die Größen der Vorsprünge (11, 16) auf beiden Kontergliedern (5, 6) so ausgeführt sind, daß das Festziehen der Konterglieder deutlich spür- oder hörbar wahrgenommen werden kann, wenn der Vorsprung (11) auf dem genannten, anderen Konterglied (5) über jeden der Vorsprünge (16) auf dem genannten Konterglied (6) rutscht, und daß der Vorsprung (11) auf dem genannten, anderen Konterglied (5) über eine festgelegte Anzahl von Vorsprüngen (16) auf dem gennanten Konterglied (6) rutschen kann, wenn die Konterglieder (5, 6) auf dem Gewinde des Gewindebolzens (1) verspannt derden, ohne eine dauerhafte Verformung des Gewindebolzens (1) oder der Konterglieder (5, 6) zu bewirken.

2. Ein Gegenmutter-Zusammenbau gemäß Anspruch 1, wobei der Gewindebolzen (1) eine Steuerkabelummantelung (2) aufweist, welche aus einer oder mehreren Adern (3) bestehen kann, die zwecks Schaffung eines Außengewindes auf seiner Außenfläche um den Bolzen gewickelt werden.

3. Ein Gegenmutter-Zusammenbau gemäß Anspruch 1 oder Anspruch 2, wobei die Konterglieder (5, 6) aus geformtem Kunstsoffmaterial bestehen.

4. Ein Gegenmutter-Zusammenbau gemäß irgendeinem der Ansprüche 1 bis 3, wobei die Stirnflächen (10, 13) radial verlaufende Flächen an den Kontergliedern umfassen.

5. Ein Gegenmutter-Zusammenbau gemäß Anspruch 4, wobei die Vorsprünge (16) auf dem genannten Konterglied (6) zwischen radial verlaufenden Nuten (15) auf seiner radial verlaufenden Fläche (13) und auf dem genannten, anderen Konterglied (5) durch radial verlaufende Rippen (11) auf seiner radial verlaufenden Fläche (10) gebildet werden.

# FIG.1

# FIG. 2

# FIG.3

# FIG. 4

# FIG.5